# EUROPEAN PATENT APPLICATION

(11) **EP 2 518 608 A2**
(43) Date of publication of application: **31.10.2012**
(21) Application number: 10839818.1
(22) Date of filing: 24.12.2010
(51) Int. Cl.: G06F 3/048, G06F 3/041

(54) **DISPLAY DEVICE FOR DISPLAYING A WEBPAGE AND DISPLAY METHOD FOR SAME**

(30) Priority: 24.12.2009 JP 2009293425; 06.10.2010 KR 20100097179; 19.05.2010 KR 20100046951
(71) Applicant: Samsung Electronics Co., Ltd., Suwon-si, Gyeonggi-do, 443-742 (KR)
(72) Inventor: KIM, Byuk-Sun, Seoul 151-050 (KR); LEE, Hye-Jeong, Seoul 138-878 (KR); KIM, Yong-Deok, Gyeonggi-do 431-798 (KR); CHOI, Sung-Wook, Seoul 138-949 (KR); NAMBU, Masanori, Minoh-shi 562-0036 (JP); TAKIZAWA, Tomomi, Minoh-shi 562-0036 (JP)
(74) Representative: Robinson, Ian Michael
(86) International application number: PCT/KR2010/009319
(87) International publication number: WO 2011/078621

(57) **Abstract**

Disclosed are a display apparatus displaying a web page and a displaying method of the same, the display apparatus including: an input unit which receives web page information; an image processor which processes a web page to display the web page; a display unit which displays thereon the processed web page; a command receiver which receives a user's command; and a controller which controls the image processor to divide the web page into at least one block, assign at least one indexing number to the block, and display the block corresponding to the indexing number according to the user's command. Accordingly, it is convenient for a user to search a web page, and/or blocks and elements thereof.

## Description

### CROSS-REFERENCE TO RELATED APPLICATION

This application claims priority from Korean Patent Application No. 10-2010-0097179, filed on October 06, 2010 in the Korean Intellectual Property Office, the disclosure of which is incorporated herein by reference.

### BACKGROUND

### Field

Apparatuses and methods consistent with the exemplary embodiments relate to a display apparatus displaying a web page and a displaying method of the same, and more particularly, to a display apparatus and a display method of the same which divides and displays a web page.

### Description of the Related Art

A user may typically use a pointing device (e.g., a mouse) to perform various functions relating to a web page such as selecting one of items and links of web pages and searching parts of a web page. However, a user who searches a web page displayed on a TV uses only a remote controller to control an operation of a web page instead of using the pointing device.

If the remote control lacks a pointing function (e.g., like a mouse) or a displayed web page includes a plurality of elements, a user may not search different parts/elements of the web page promptly and/or efficiently. In that case, an additional function is needed.

### SUMMARY

Accordingly, one or more exemplary embodiments provide a display apparatus and a web displaying method of the same which easily searches a web page, a block and an element.

Another exemplary embodiment is to provide a display apparatus and a web page displaying method of the same which indexes an element according to a priority by using web page information.

Still another exemplary embodiment is to provide a display apparatus and a web page displaying method of the same which displays a reduced screen of an indexed web page.

Yet another exemplary embodiment is to provide a display apparatus and a web page displaying method of the same which provides a user with information of an indexed element.

The foregoing and/or other aspects may be achieved by providing a display apparatus including: an input unit which receives web page information; an image processor which processes a web page to display the web page; a display unit which displays thereon the processed web page; a command receiver which receives a user's command; and a controller which controls the image processor to divide the web page into at least one block, assign at least one indexing number to the block, and display the block corresponding to the indexing number according to the user's command.

The block may include at least one element, and the image processor may assign the indexing number to one of the elements.

The block may include a plurality of elements, the web page information may include tabindex information of the element, and the image processor may assign the indexing number to one of the plurality of elements based on the tabindex information.

The block may include a plurality of elements, the web page information includes character display information including at least one of a character size and a character thickness with respect to the element, and the image processor may assign the indexing number to one of the plurality of elements based on the character display information.

The block may include a plurality of elements, and the image processor may display an indexing number to index a plurality of elements included in the block corresponding to the selected indexing number if the indexing number is selected.

The image processor may display in an area of the display unit a reduced screen of a web page including the indexing number corresponding to each block.

The block may include a plurality of elements and the image processor may assign a preset number of indexing numbers to the elements according to a predetermined priority.

The web page information may include tabindex information of the element, and the image processor may set the priority based on the tabindex information.

The web page information may include character display information including at least one of a character size and a character thickness with respect to the element, and the image processor may set the priority based on the character display information.

The image processor may display in an area of the display unit an information window of the element corresponding to the indexing number.

The image processor may assign the indexing number to a single web page.

The image processor may assign the indexing number to a screen of the web page displayed on the display unit.

The foregoing and/or other aspects may be achieved by providing a web page displaying method of a display apparatus which includes a display unit, the method including: receiving web page information; dividing the web page into at least one block and assigning at least one indexing number to the block; receiving a user's command to select the indexing number; displaying the block corresponding to the selected indexing number according to the user's command.

The block may include at least one element, and the assigning the indexing number may include assigning the indexing number to one of the elements.

The block may include a plurality elements, and the web page information may include at least one of tabindex information, a character size and a character thickness with respect to the element, and the assigning the indexing number may include assigning the indexing number to one of the plurality of elements based on at least one of the tabindex information, the character size an the character thickness.

The block may include a plurality of elements, and the method may further include displaying an indexing number to index a plurality of elements included in the block corresponding to the selected indexing number.

The block may include a plurality of elements, and the assigning the indexing number may include assigning a preset number of indexing numbers to the element according to a predetermined priority.

The web page information may include at least one tabindex information, the character size and the character thickness with respect to the element, and the assigning the indexing number may include setting the priority based on at least one of the tabindex information, the character size and the character thickness.

The method may further include displaying in an area of the display unit an information window with respect to the element corresponding to the indexing number.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a control block diagram of a display apparatus according to an exemplary embodiment;
FIG. 2 illustrates a web page including a plurality of blocks;
FIG. 3 illustrates a web page which is divided into a plurality of blocks and displayed in the display apparatus according to an exemplary embodiment;
FIG. 4 illustrates a block in which an indexing number is assigned in the display apparatus according to an exemplary embodiment;
FIG. 5 illustrates a block in which an indexing number is assigned to an element included in the block in the display apparatus in FIG. 4;
FIG. 6 illustrates a reduced screen of a web page including an indexing number in the display apparatus in FIG. 4;
FIG. 7 is a control flowchart of a web page displaying method of the display apparatus in FIG. 4;
FIG. 8 illustrates a block in which an indexing number is assigned in the display apparatus according to another exemplary embodiment;
FIG. 9 illustrates an information window of an element in the display apparatus in FIG. 8;
FIG. 10 illustrates an information window of another element in the display apparatus in FIG. 8; and
FIG. 11 is a control flowchart of a web page displaying method of the display apparatus in FIG. 8.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

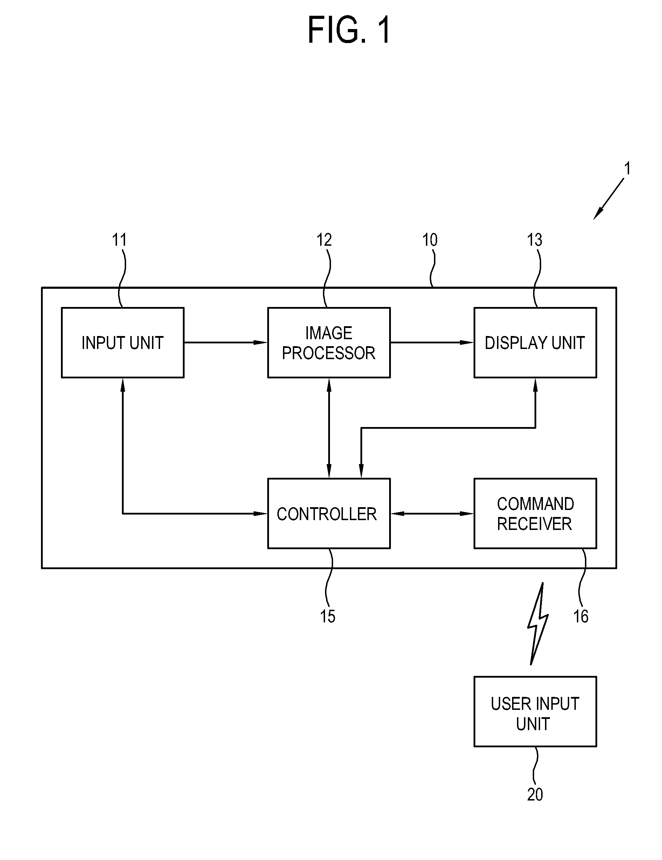

FIG. 1 is a control block diagram of a display apparatus according to an exemplary embodiment.

As shown therein, a display apparatus 1 includes a display main body 10 to display an image thereon, and a user input unit 20 to control the display main body 10 by a user's manipulation. The display apparatus 1 according to the exemplary embodiment includes a television which receives and browses web information through a network such as the Internet, a computer system including a display unit such as a monitor or a screen, and a personal portable terminal which provides a web browsing function, such as a netbook, an e-book and a smart phone.

The display main body 10 includes an input unit 11, an image processor 12, a display unit 13, a command receiver 14 and a controller 15.

The user input unit 20 transmits to the display main body 10 a remote control signal according to a user's manipulation. The display main body 10 receives a remote control signal from the user input unit 20 and performs a corresponding operation. The user input unit 20 may include a direction key, a numeric key, a selection key, or the like. The user input unit 20 may further include a wheel input unit or a touch pad. The user input unit 20 may further include a signal transmitter to transmit a remote control signal corresponding to a detected user's input, and a controller to control the foregoing elements.

The input unit 11 may receive web page information from the Internet. The input unit 11 may perform a communication operation through a network to receive web page information. The communication operation performed by the input unit 11 includes wired communication and wireless communication. The input unit 11 may further receive an image signal including an image content. The image signal may include an audio content and/or a data content as well as the image content. The image signal received by the input unit 11 includes a broadcasting signal transmitted by a broadcasting station and a signal input by a predetermined image device. In the case of the broadcasting signal, the input unit 11 may selectively receive a broadcasting signal from one of a plurality of channels. The broadcasting signal includes an air wave broadcasting signal, a cable broadcasting signal, a satellite broadcasting signal and other known broadcasting signals. The type of the broadcasting signal includes digital broadcasting and analog broadcasting. The input unit 11 may process a received broadcasting signal to obtain an image content therefrom. Such signal processing includes, without limitation, tuning, analog-digital conversion, demodulation, and digital-analog conversion.

In the case of an image signal input by an image device, the input unit 11 may communicate with the image device transmitting the image signal corresponding to the property of the input image signal. Such communication includes wired communication and wireless communication, and analog communication and digital communication. The type of communication includes all types of communication which is known to be used for transmitting an image content. The type of the image device supplying the image signal to the input unit 11 includes a DVD player, a blue-ray (BD) player, a PC, a mobile phone, a smart phone and other TVs but not limited thereto. The input unit 11 may process the input image signal to obtain an image content therefrom. Such image processing includes, without limitation, analog-digital conversion and digital-analog conversion.

Further, the input unit 11 may receive an image signal from a predetermined server through a network, or receive an image signal from a portable storage medium such as a universal serial bus (USB) device. In each case, the input unit 11 may perform a given communication with a counterpart device to receive an image signal. The input unit 11 may receive and process the image signal by a control of the controller 15.

The image processor 12 processes web page information (hereinafter, to be also called "web page") received by the input unit 11 and image contents obtained from an image signal. The image processor 12 may include a browser to browse web pages. The image processing performed by the image processor 12 includes demultiplexing, decoding, scaling, picture quality adjustment and picture quality improvement. The image processor 12 may process an image on a user interface (UI) menu for a user interface. The image processor 12 may overlap an image obtained from an image content and at least a part of a UI menu in a single screen or arrange the foregoing side by side.

The display unit 13 displays the web page and the image processed by the image processor 12. The display method of the web page and the image by the display unit 13 is not limited, and includes all of known display methods. The display method may be provided by using liquid crystal display (LCD), organic light emitting diode (OLED), plasma display panel (PDP), projection, cathode ray tube (CRT), or the like.

The command receiver 14 receives a remote control signal from the user input unit 20. The method of receiving the remote control signal by the command receiver 14 includes infrared, Bluetooth, Wi-Fi, or the like type.

The controller 15 controls the image processor 12 to divide a web page into at least one block, assigns at least one indexing number to the block and display the block corresponding to the indexing number according to a user's command. The "assignment" of the indexing number may mean displaying on the display unit 13 an algorithm setting an indexing number or the indexing number by analyzing web page information, and may include both of the above cases. At least one content of a block is named an element E. If the element E is selected, the image processor 12 browses on the basis of the web page information, and displays on the display unit 13 a content corresponding to the element E.

The controller 15 controls overall operations of the display main body 10 by controlling each element of the display main body 10 according to user's input information obtained from a remote control signal received through the user input unit 20, and by controlling the input unit 11 to receive a desired web page and/or image signal. The controller 15 may include a storage unit (not shown) to store therein data required for the foregoing control operation.

The controller 15 may include a non-volatile memory, e.g., electrically erasable programmable read-only memory (EEPROM), a flash memory, and a hard disk drive (HDD) to store therein an execution code of a computer program corresponding to the control operation, a volatile memory to load at least a part of the execution code stored in the non-volatile memory, and a microprocessor to execute the execution code loaded to the volatile memory.

The display main body 10 may further include other elements for the operation of the display apparatus 1. For example, the display main body 10 may include an audio signal receiver, an audio signal processor and an audio output unit to receive, process and output an audio signal, an input pad unit provided in the display main body 10 separately from the user input 20 to receive a user's input, and a power supply unit to supply power for operations of the display main body 10.

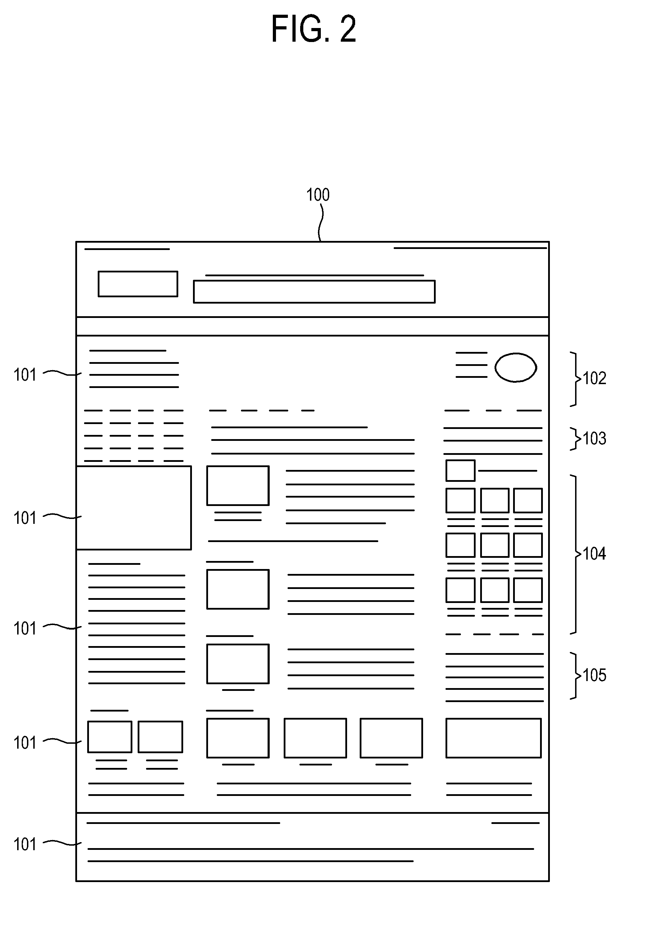

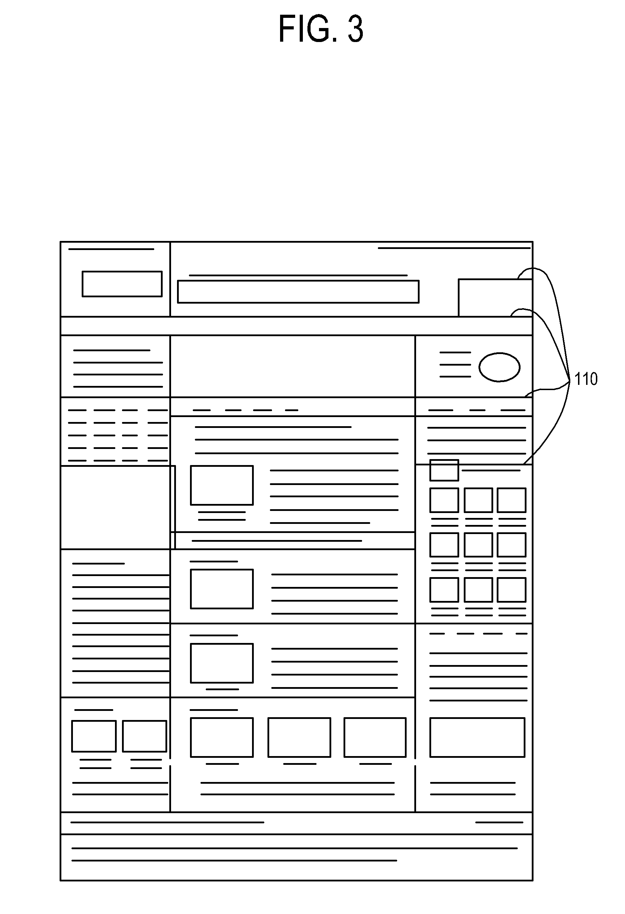

The display apparatus 1 in FIG. 1 divides a web page into a plurality of blocks and displays such divided web page in blocks. FIG. 2 illustrates a web page 100 including a plurality of blocks 101. FIG. 3 illustrates a web page that is divided into a plurality of blocks 101 to 105 displayed in the display apparatus 1 according to an exemplary embodiment. As shown in FIG. 2, each of the plurality of blocks of the web page 100 refers to a unit area into which the web page 100 is divided according to visual, geometric, semantic, and logical standards. Lines, boxes and a circle of the plurality of blocks 101 to 105 simplify texts, images, and diagrams of the plurality of blocks 101 to 105 for conveniences.

As shown in FIG. 3, the display apparatus 1 may display a boundary 110 between the plurality of blocks 101 to 105 so that a user may recognize the web page 100 divided into the plurality of blocks 101 to 105. The display apparatus 1 may display one of the plurality of blocks 101 to 105 by focusing it on the display unit 13. That is, the display apparatus 1 may display the plurality of blocks 101 to 105, one of which is located in a substantially central area of a screen of the display unit 13. The web page 100 may be enlarged at an appropriate ratio for a user to recognize a content of the web page 100. One of the plurality of blocks 101 to 105 which is focused may be highlighted and displayed. The display apparatus 1 moves the focus to the plurality of blocks 101 to 105 up and down and the left and right sides by a user's manipulation to thereby browse the web page 100. Then, a user may browse the web page 100 conveniently and promptly.

The controller 15 may control the image processor 12 to analyze the input web page 100 and divide the web page 100 into the plurality of blocks 101 to 105. The method of dividing the web page 100 into the plurality of blocks 101 to 105 may vary. For example, the web page 100 may be divided by using a hierarchy structure of the web page 100 and by dividing the web page on an image basis.

In the "method of using the hierarchy structure of the web page 100", a document object model tree (hereinafter, the "DOM tree") of the web page 100 which is to be divided is obtained (process 1). Then, a block meeting the condition is extracted from the DOM tree (process 2). The condition may include the following:
(1) the extracted block is not the same in size as the block added before (removal of duplication);
(2) the block exists in a predetermined depth (a threshold value for speed up may be set, e.g., at an random value of 6 which is included in a range of 5 to 10);
(3) a width and a height of an HTML tag is a predetermined size or more (e.g. width of 120 and a height of 30 may be set in consideration of readability and the size of a screen);
(4) only limited tags are permitted (e.g., DIV, UL, LI, DL, DD, P, TD, Table, IFRAME, TR, FORM, DT, OL, etc.);
(5) a block a depth of which is 2 or more is not out of a parent node; and
(6) a block a depth of which is 2 or more overlaps the parent node in one of top and bottom and left and right sides.

If a block which does not include other child blocks therein, among the blocks obtained through the process 1 and the process 2, is a predetermined size or more, the concerned area only may be divided by the method of dividing the web page on an image basis (process 3). The process may be as follows:
(1) compare a color of a previous coordinate γ-1 and a color of a current coordinate y by transversely scanning vertical lines of an image and a difference of a color comparison of five or more becomes a basis for dividing a previous block and other blocks;
(2) compare a color of a previous coordinate x-1 and a color of a current coordinate x by vertically scanning transverse lines of an image and a difference of a color comparison of five or more becomes a basis for dividing a previous block and other blocks;
(3) If a color is consecutive predetermined times or more in the scanning operation in the above cases, it is determined to be a line;
(4) the largest color comparison value is selected from the difference of values to R, G and B;
(5) a recursive calculation is performed based on the result of the line scanning to the transverse and vertical points to divide blocks; and
(6) the divided blocks are extracted from those not overlapping blocks extracted before.

If a tag area is not the same as the block size viewed by human eye or if there is a white space between blocks and the divided areas are not good to view, the coordinates of the extracted blocks may be adjusted as follows (process 4):
(1) if blocks are right next to each other and a distance between coordinates of the blocks are smaller than a particular threshold value, a child block of the compared block has the same value as that of the previous block (the threshold value may be set at 50 if x components are compared, and set at 30 if y components are compared); and
(2) such coordinate comparison is performed to x and y coordinates of a left top of the block and x and y coordinates of a right bottom of the block and x is compared to x and y is compared to y, regardless of the location of the component.

If the web page is divided by the above method, any type of the web page may be divided into blocks and browsed. Thus, readability of the web page information is maintained and a convenient and prompt browsing is available. As the web page can be divided into semantic blocks, the quantity of information of the web page provided to a user may be adjusted.

The block may vary in size depending on the web page 100. If the block is too large, e.g., if larger than a screen of the display unit 13, a user may feel inconvenient in recognizing the content of the block. Even if the ratio of the web page 100 is reduced to solve the foregoing problem, readability becomes worse. The block means a minimum unit of a block that cannot be divided anymore by the foregoing method.

If the block of the web page 100 is too large, the controller 15 of the display apparatus 1 according to the exemplary embodiment may redivide the block into a plurality of specific blocks for a user to recognize the content of the block.

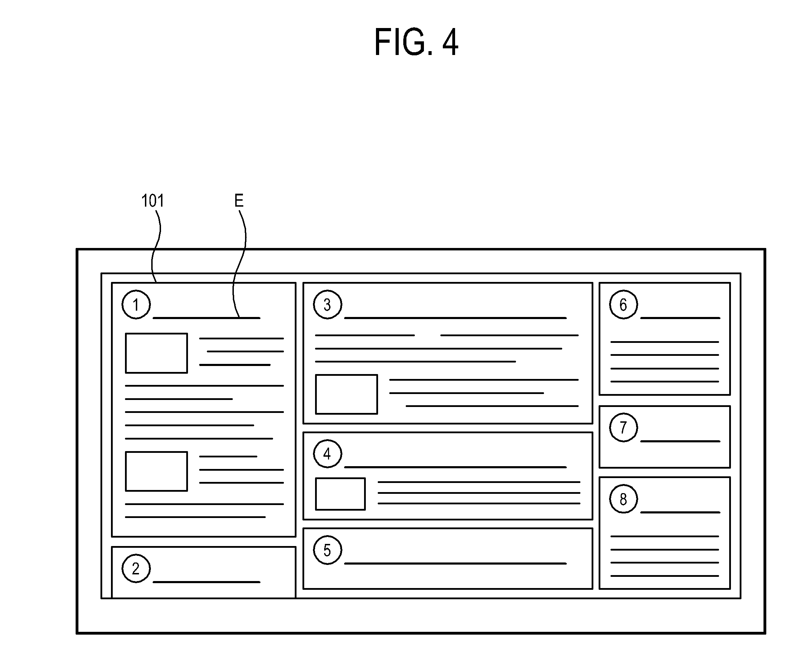

FIG. 4 illustrates a block in which an indexing number is assigned in the display apparatus according to the exemplary embodiment. As shown therein, the image processor 12 assigns indexing numbers to to a plurality of blocks. If the display apparatus 1 includes a TV and the user input unit 20 includes a remote control device, a user should input a direction key several times or touch frequently to search or select a desired block or element from the web page 100. If the display apparatus includes a personal terminal which has a small display unit 13 displaying a small web page 100, a user may not easily search the block 101. To solve the foregoing problem, the controller 15 assigns the indexing numbers to to the blocks 101 of the web page 100 in a predetermined order. The indexing numbers to may be assigned in a column or in a row. Otherwise, the indexing numbers to may be assigned in the order of the blocks 101 including the element E frequently selected by a user. A user may intuitively and easily select the blocks 101 by using a numeric button included in the user input unit 20 without manipulating several times to view a single web page 100. If the block 101 is selected, a graphic user interface (GUI) may be displayed on the display unit 13 to distinguish the block 101 from other blocks. The GUI may include a thick line or a highlighted box illustrating a frame of the block 101 or may include different colors, shades or degrees of clearness. The GUI enables a user to promptly and intuitively recognize the block 101 selected from the web page 100.

The image processor may assign the indexing numbers to to one of the element E included in the block 101. The indexed element E may be selected randomly or according to a predetermined condition. The image processor 12 may assign the indexing numbers to to the element E which is displayed on a top of the block 101 or assign the indexing numbers to based on web page information input through input unit 11. The web page information may include tabindex information of the element E, and the image processor 12 may assign the indexing numbers to to the element E having the upper most index among the plurality of elements E included in the block 101. If the web page information includes character display information of one of a character size and a character thickness with respect to the element E, the image processor 12 may assign the indexing number to one of the plurality of elements based on the character display information. For example, if there is an element E expressed in a board font and being large in size, it is very likely that the indexing numbers to may be assigned to the relevant element prior to another element E expressed in the board font or being large in size.

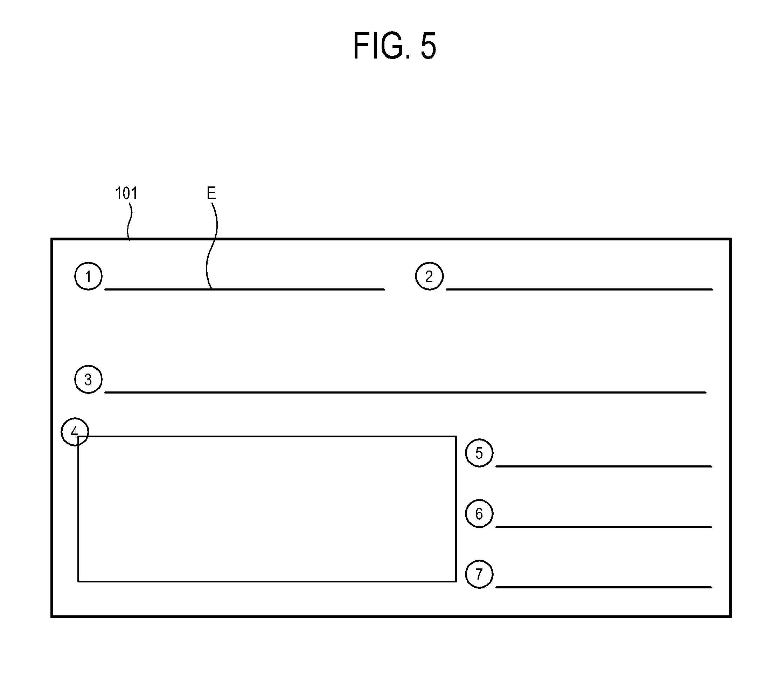

FIG. 5 illustrates a block which includes an element assigned with the indexing number in the display apparatus in FIG. 4.

If a user selects one of the indexing numbers to , the image processor 12 displays on the display unit 13 the indexing numbers to to index the plurality of elements E included in the block corresponding to the selected indexing number. That is, a user may select one of the plurality of elements E included in the block 101 after selecting the block 101. If the element E is selected, the corresponding content is browsed. The indexing numbers to which index the elements E may be assigned to all of elements E or to limited elements E based on a particular priority. Otherwise, the indexing numbers to may be assigned to elements E which meet a predetermined condition. The condition for assigning the indexing numbers may be set in a user environment in which the web page 100 is searched and a user may change the setting.

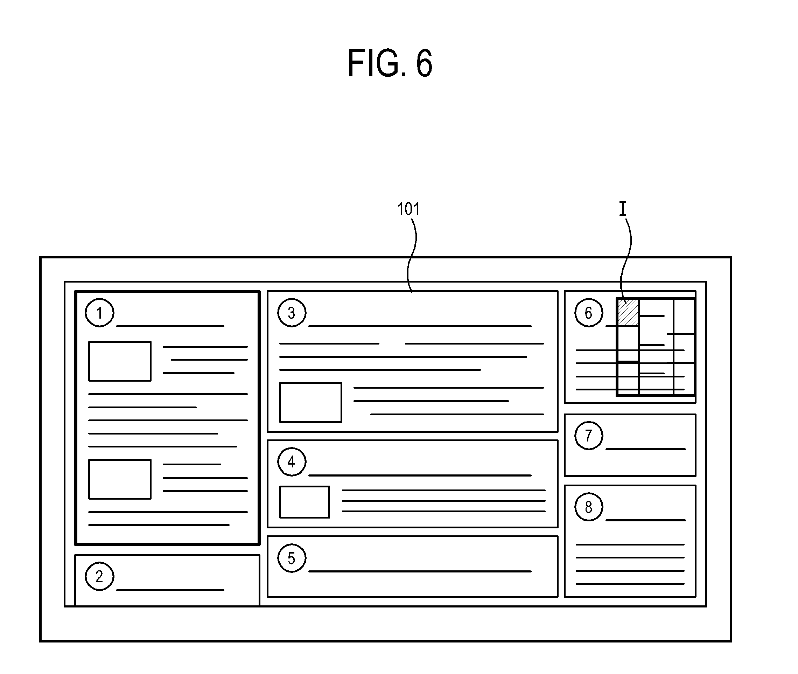

FIG. 6 illustrates a reduced screen of a web page including an indexing number in the display apparatus in FIG. 4.

The image processor 12 may assign the indexing number to a single web page or assign the indexing number to a screen of a web page displayed on the display unit 13 when displaying the indexing number in the web page 100. That is, the element which is assigned with the indexing number may be extracted by web page or by screen.

If the indexing number is assigned by screen, a new indexing number is assigned to the block 101 displayed on the screen if a user scrolls or moves the web page 100. In this case, a user may easily recognize available indexing numbers but cannot identify the size of the entire web page 100. When the indexing number is assigned by a web page, a user may not identify the number of blocks 101 included in the web page 100, nor may know available blocks if the entire web page 100 is not displayed on the display unit 13.

The image processor 12 according to the present exemplary embodiment displays in an area of the display unit 13 a reduced screen I of the web page 100 including the indexing number corresponding to each block. As shown therein, the reduced screen I is displayed in a upper right side of the display unit 13 and distinguishes a focused block from other blocks to . As the reduced screen 1 includes the entire web page 100 and displays the location of the block 101, a user may select a hidden block 101 from the display unit 13 without performing a scroll operation. A user may remove the reduced screen I from the display unit 13, enlarge or reduce the size of the reduced screen I.

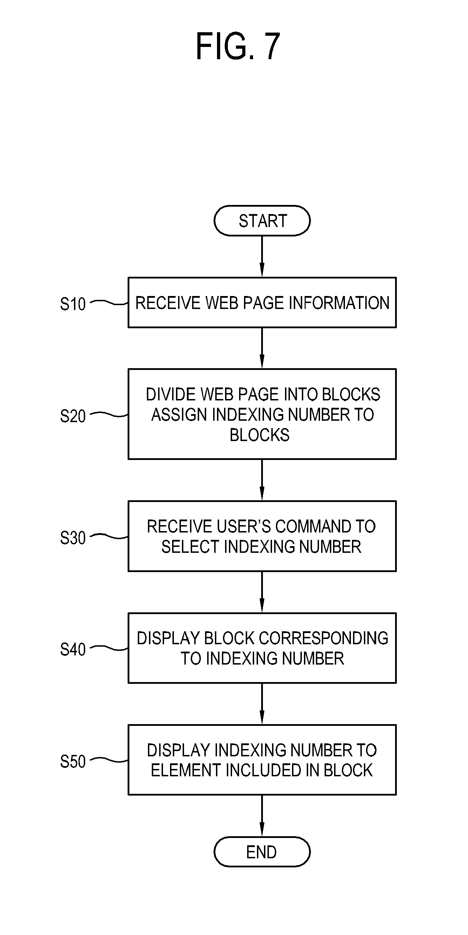

FIG. 7 is a control flowchart of a web page displaying method of the display apparatus in FIG. 4. Referring to FIG. 7, the web page displaying method according to the present exemplary embodiment will be described.

The controller 15 controls the input unit 11 to receive the web page information (S10), and controls the image processor 12 to divide the web page 100 into at least one block 101 and assigns at least one indexing number to the block 101 (S20). The indexing number may be assigned to one of the elements E.

Then, upon receiving a user's command to select the indexing number through the command receiver 14 (S30), the controller 15 controls the image processor 12 to display the block 101 corresponding to the selected indexing number (S40).

The controller 15 displays the indexing number to index the plurality of elements E included in the block 101 to thereby select the elements by a user (S50).

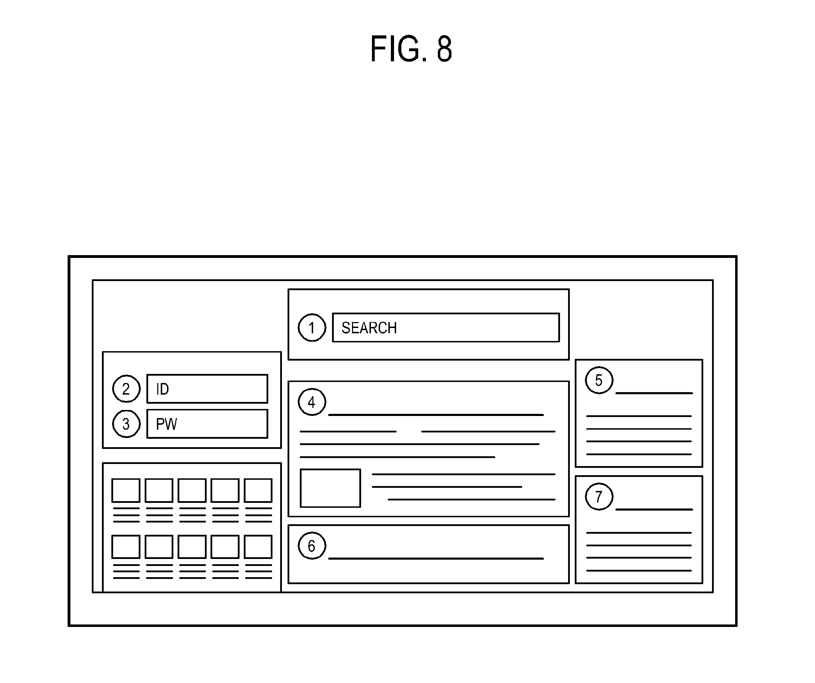

FIG. 8 illustrates a block in which the indexing number is assigned in the display apparatus according to another exemplary embodiment.

The controller 15 according to the present exemplary embodiment controls the image processor 12 to assign a preset number of indexing numbers to the element E according to a predetermined priority. The block 101 may, or may not, include a plurality of indexing numbers. Otherwise, a single block 101 may be set to include at least one indexing number.

The image processor 12 may assign the preset number of indexing numbers to the element E according to the preset standard, based on tag information of a web page input through the input unit 11. The web page tag information may include at least one of tabindex information of the element E and character size and character thickness of the element E. Frequently searched issues or important issues or recently updated contents may be displayed in larger or thicker characters or in different colors to be distinguished from other contents. The image processor 12 sets the order of assigning the indexing number to the element E by using the foregoing information, and assigns the indexing number to the element E according to the set priority.

If the web page 100 is presumed to include a portal site, a top priority may include a search window in which a user inputs a character and an input window in which a user inputs an ID and a password for a log-in. The assignment of the priority to the search window or the input window may be performed with reference to the tabindex.

As the indexing number is assigned according to the priority, the location of the block 101 and the display/non-display of the element E on the display unit 13 are not related to the display of the indexing number.

A user may newly set or change the number of indexing numbers to be assigned or the standard for the priority. A content provider which provides web page information may transmit information of the priority to the display apparatus 1.

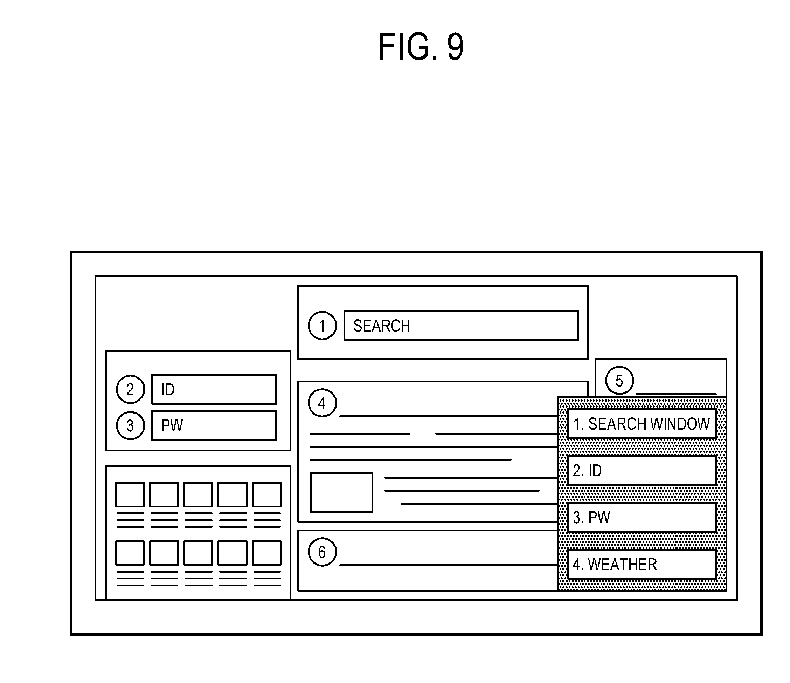

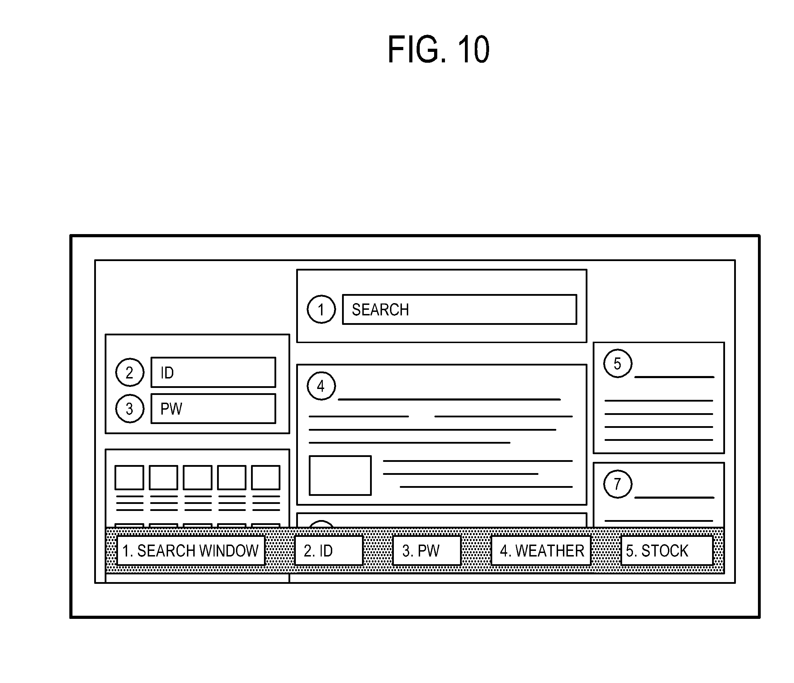

FIGS. 9 and 10 illustrate an information window of the element in the display apparatus in FIG. 8. Information windows II and III of the element may include a brief explanation of the element having the indexing number assigned thereto, and may include a title or a genre of the content. A user may easily search the element having the priority while pressing the numeric button of the user input unit 20.

The information window II of the element in FIG. 9 is displayed in a bottom right side of the display unit 13, and the information window III of the element in FIG. 10 is displayed in a lower fringe of the display unit 13. The information windows II and III of the element is preferably but not necessarily displayed in an area of the display unit 13, if possible, not to interrupt a user's search of the web page 100, and a user preferably controls the size and the display/non-display of the information windows II and III of the element.

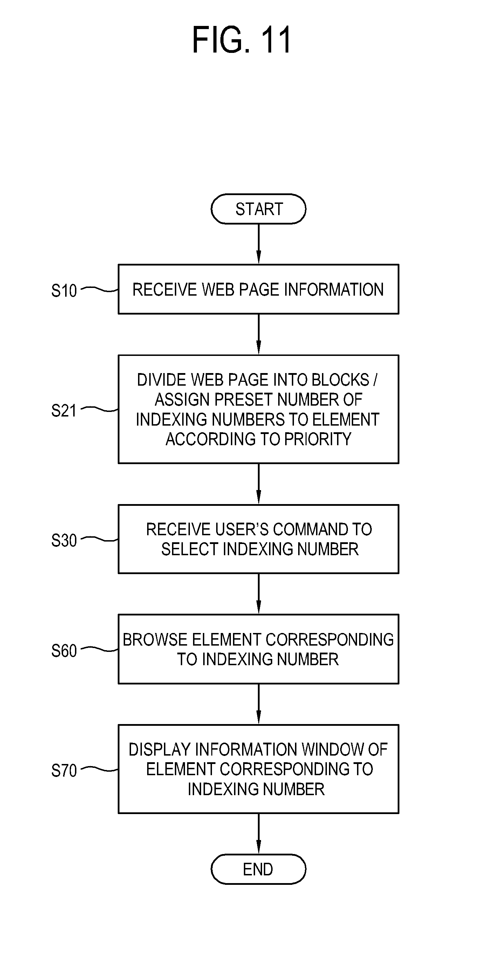

FIG. 11 is a control flowchart of a web page displaying method of the display apparatus in FIG. 8. Referring to FIG. 11, the web page displaying method according to the present exemplary embodiment will be described.

Similarly to FIG. 7, the controller 15 controls the input unit 11 and receives the web page information (S10).

The controller 15 divides the web page 100 into at least one block 101, and assigns the preset number of indexing numbers to the element according to the predetermined priority (S21). The web page information may include at least one of the tabindex information, character size and character thickness of the element, and the image processor 12 sets the priority based on at least one of the tabindex information, the character size and the character thickness.

Upon receiving a user's command to select the indexing number through the command receiver 14 (S30), the controller 15 controls the image processor 12 to browse the element corresponding to the selected indexing number (S60).

The controller 15 may further display the information windows II and III of the element in an area of the display unit 14 to indicate the indexed element (S70).

The present exemplary embodiments browse the web page 100 by block, assign the indexing number to the browsed block or the element included in the block and enable a user to easily search the web page 100.

As described above, a display apparatus and a web page displaying method of the same according to an exemplary embodiment easily searches a web page, a block and an element.

A display apparatus and a web page displaying method of the same according to another exemplary embodiment indexes an element according to a priority by using web page information.

A display apparatus and a web page displaying method of the same according to another exemplary embodiment displays a reduced screen of an indexed web page.

A display apparatus and a web page displaying method of the same according to another exemplary embodiment provides a user with information of an indexed element.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. A display apparatus comprising:
an input unit which receives web page information;
an image processor which processes a web page to display the web page;
a display unit which displays thereon the processed web page;
a command receiver which receives a user's command; and
a controller which controls the image processor to divide the web page into at least one block, assign at least one indexing number to the block, and display the block corresponding to the indexing number according to the user's command.

2. The display apparatus according to claim 1, wherein the block comprises at least one element, and the image processor assigns the indexing number to one of the elements.

3. The display apparatus according to claim 2, wherein the block comprises a plurality of elements, the web page information comprises tabindex information of the element, and the image processor assigns the indexing number to one of the plurality of elements based on the tabindex information.

4. The display apparatus according to claim 2, wherein the block comprises a plurality of elements, the web page information comprises character display information comprising at least one of a character size and a character thickness with respect to the element, and the image processor assigns the indexing number to one of the plurality of elements based on the character display information.

5. The display apparatus according to claim 2, wherein the block comprises a plurality of elements, and the image processor displays an indexing number to index a plurality of elements included in the block corresponding to the selected indexing number if the indexing number is selected.

6. The display apparatus according to claim 2, wherein the image processor displays in an area of the display unit a reduced screen of a web page comprising the indexing number corresponding to each block.

7. The display apparatus according to claim 1, wherein the block comprises a plurality of elements and the image processor assigns a preset number of indexing numbers to the elements according to a predetermined priority.

8. The display apparatus according to claim 7, wherein the web page information comprises tabindex information of the element, and the image processor sets the priority based on the tabindex information.

9. The display apparatus according to claim 7, wherein the web page information comprises character display information comprising at least one of a character size and a character thickness with respect to the element, and the image processor sets the priority based on the character display information.

10. The display apparatus according to claim 7, wherein the image processor displays in an area of the display unit an information window of the element corresponding to the indexing number.

11. The display apparatus according to claim 1, wherein the image processor assigns the indexing number to a single web page.

12. The display apparatus according to claim 1, wherein the image processor assigns the indexing number to a screen of the web page displayed on the display unit.

13. A web page displaying method of a display apparatus which comprises a display unit, the method comprising:
receiving web page information;
dividing the web page into at least one block and assigning at least one indexing number to the block;
receiving a user's command to select the indexing number;
displaying the block corresponding to the selected indexing number according to the user's command.

14. The method according to claim 13, wherein the block comprises at least one element, and the assigning the indexing number comprises assigning the indexing number to one of the elements.

15. The method according to claim 14, wherein the block comprises a plurality elements, and the web page information comprises at least one of tabindex information, a character size and a character thickness with respect to the element, and the assigning the indexing number comprises assigning the indexing number to one of the plurality of elements based on at least one of the tabindex information, the character size an the character thickness.

16. The method according to claim 14, wherein the block comprises a plurality of elements, further comprising:
displaying an indexing number to index a plurality of elements included in the block corresponding to the selected indexing number.

17. The method according to claim 13, wherein the block comprises a plurality of elements, and the assigning the indexing number comprises assigning a preset number of indexing numbers to the element according to a predetermined priority.

18. The method according to claim 17, wherein the web page information comprises at least one tabindex information, the character size and the character thickness with respect to the element, and the assigning the indexing number comprises setting the priority based on at least one of the tabindex information, the character size and the character thickness.

19. The method according to claim 17, further comprising displaying in an area of the display unit an information window with respect to the element corresponding to the indexing number.
